# EUROPÄISCHE PATENTSCHRIFT

(11) **EP 4 000 416 B1**
(45) Veröffentlichungstag und Bekanntmachung des Hinweises auf die Patenterteilung: **08.07.2026**
(21) Anmeldenummer: 21206369.7
(22) Anmeldetag: 04.11.2021
(51) Int. Cl.: A23L 7/117, A23L 11/00

(54) **VERFAHREN ZUR HERSETELLUNG EINES MÜSLIPRODUKTES**
METHOD FOR PRODUCING A MUESLI PRODUCT
PROCÉDÉ DE FABRICATION D'UN PRODUIT À BASE DE MUESLI

(30) Priorität: 19.11.2020 DE 102020214616
(43) Veröffentlichungstag der Anmeldung: 25.05.2022
(73) Patentinhaber: Salata AG, 98617 Ritschenhausen (DE)
(72) Erfinder: Winkel, Mirko, 98617 Ritschenhausen (DE)
(74) Vertreter: Ullrich & Naumann PartG mbB

(56) Entgegenhaltungen:
- DE-A1- 102012 023 384
- GB-A- 2 486 873
- ANONYMOUS: "Skylar on Instagram: "Am I the first person to come up with chickpea cereal? Baked the chickpeas until crunchy, mixed it in maple syrup until it was fully coated..."", 3 June 2014 (2014-06-03), XP055907681, Retrieved from the Internet <URL:https://www.instagram.com/p/oxHjp6rYAo/> [retrieved on 20220331]
- DATABASE GNPD [online] MINTEL; 4 November 2019 (2019-11-04), ANONYMOUS: "Lentil Flakes with Raspberry and Coconut", XP055900970, retrieved from https://www.gnpd.com/sinatra/recordpage/7006959/ Database accession no. 7006959
- DATABASE GNPD [online] MINTEL; 24 January 2020 (2020-01-24), ANONYMOUS: "Cranberry & Plum Protein Muesli", XP055900968, retrieved from https://www.gnpd.com/sinatra/recordpage/7207289/ Database accession no. 7207289
- DATABASE GNPD [online] MINTEL; 7 May 2020 (2020-05-07), ANONYMOUS: "Apple & Nut Low Carb Muesli with Omega-3 Crunch", XP055900964, retrieved from https://www.gnpd.com/sinatra/recordpage/7603693/ Database accession no. 7603693
- DATABASE GNPD [online] MINTEL; 3 October 2017 (2017-10-03), ANONYMOUS: "Roasted Green Seed Melody", XP093253543, retrieved from https://www.gnpd.com/sinatra/recordpage/5142147/ Database accession no. 5142147
- GOOGLE: "Date Legumino M�sli", 25 February 2025 (2025-02-25), XP093253705, Retrieved from the Internet <URL:www.google.de> [retrieved on 20250225]
- LEGUMINO PAPAYA /: "M�sli Mix Linsen & Papaya", 1 July 2016 (2016-07-01), pages 1 - 4, XP093253711, Retrieved from the Internet <URL:https://www.legumino.de/Muesli-Mix-Linsen-Papaya/> [retrieved on 20250225]
- ANONYMOUS LEGUMINO ET AL: "Legumino M�sli Mix Linsen & Papaya | Th�ringer Wald Shop", 29 July 2020 (2020-07-29), XP093253708, Retrieved from the Internet <URL:https://thueringer-wald.shop/genuss-mehr/speisen/snacks/2078/muesli-mix-linsen-papaya> [retrieved on 20250225]

## Beschreibung

Die Erfindung betrifft ein Verfahren zur Herstellung eines Müsliprodukts.

Müsliprodukte und Müslispeisen sind ein fester Bestandteil der Europäischen Frühstückskultur. Üblicherweise enthalten Müsliprodukte Haferflocken und weitere Produkte auf Getreidebasis, wie etwa Maisflocken oder Reisprodukte. Ferner enthalten die Müsliprodukte oftmals Nüsse und/oder Obst, wobei das Obst frisch oder als Trockenobst enthalten ist.

Für den Verzehr wird das Müsliprodukt zumeist mit Milch, Joghurt, Milchersatzprodukten oder Fruchtsaft vermischt.

Müsliprodukte auf Getreidebasis enthalten viele Kohlenhydrate, die nach dem Verzehr, den Blutzuckerspiegel ansteigen lassen. Zwar haben diese Müslis typischerweise einen hohen Anteil an Ballaststoffen, wodurch eine lange Sättigung erzielt werden kann, sobald der Blutzuckerspiegel jedoch sinkt, setzt das Hungergefühl wieder ein.

Des Weiteren sind Müsliprodukte auf Getreidebasis oftmals ernährungsphysiologisch nicht ausgewogen. So ist beispielsweise der Anteil an Proteinen und Mineralien gering, während der Kohlenhydratanteil hoch ist. Durch die Verwendung von Getreidekomponenten enthalten die Müsliprodukte außerdem Gluten, gegen das immer mehr Menschen eine Unverträglichkeit entwickelt haben. Weiterhin weisen diese Müsliprodukte oft Nüsse oder Spuren von Nüssen auf, die bei einigen Menschen Allergien auslösen können.

DE 10 2012 023 384 A1 offenbart ein Nuss-Surrogat, welches als Hauptbestandteile Hülsenfrüchte und Pflanzenfett aufweist sowie ein Verfahren zu dessen Herstellung. Die Hülsenfrüchte werden erfindungsgemäß unter Temperatureinwirkung gegart, einem Vakuum ausgesetzt und unter Vakuumbedingungen mit dem Pflanzenfett versehen, wobei nachfolgend das Vakuum wieder aufgehoben wird. Die so behandelten Hülsenfrüchte erhalten so einen nussigen Geschmack, ohne dass ein allergenes Potenzial besteht.

GB 2486873 A beschreibt ein Müsliprodukt umfassend Flocken aus Hülsenfrüchten oder Leguminosen wie Kichererbsen. Darüber hinaus offenbart GB 2486873 A ein Verfahren zur Herstellung der Flocken.

Der vorliegenden Erfindung liegt daher die Aufgabe zugrunde, ein Verfahren zur Herstellung eines glutenfreien Müsliprodukts bereitzustellen, das langanhaltend sättigt.

Erfindungsgemäß wird die voranstehende Aufgabe durch die Merkmale des Anspruch 1 gelöst. Danach stellt die Erfindung ein Verfahren zur Herstellung eines Müsliprodukts bereit, wobei das Müsliprodukt verzehrfertige Hülsenfrüchte und eine Fruchtkomponente umfasst, wobei das Müsliprodukt keine Getreidekomponente enthält und wobei die Hülsenfrüchte Linsen umfasst. Das Verfahren umfasst die Schritte:
a) Einweichen der Hülsenfrüchte, wobei die Einweichzeit zwischen 1 und 24 Stunden liegt,
b) Vorkochen der eingeweichten Hülsenfrüchte, und
c) Trocknen der vorgekochten Hülsenfrüchte auf eine Restfeuchte unter 10 Gew.-%, wobei die Trocknungszeit zwischen 2,5 und 5 Stunden liegt.

Die eingeweichten Hülsenfrüchte durchlaufen einen zweistufigen Vorkochschritt wobei die Hülsenfrüchte in einer ersten Stufe unter Überdruck bei einer Temperatur zwischen 100°C und 120°C und einer Kochzeit zwischen 2 und 10 Minuten gekocht werden und in einer zweiten Stufe unter atmosphärischen Druck bei einer Temperatur zwischen 40°C und 70°C und einer Kochzeit zwischen 20 und 60 Minuten gekocht werden.

Das Müsliprodukt erfüllt alle Nutzererwartungen an ein Müsli; es ist knackig und knusprig sowie schnell zubereitet und geschmacklich ansprechend.

Hülsenfrüchte sind Energielieferanten aus rein pflanzlicher Quelle und sättigen langanhaltend. Dabei sind sie arm an Zuckern und Fetten und stabilisieren den Blutzuckerspiegel. Hülsenfrüchte liefern eine hohe Menge an pflanzlichem Eiweiß und Ballaststoffen und versorgen den Körper mit Folsäure und anderen nervenstärkenden B-Vitaminen, lebensnotwendigen Mineralstoffen und einer Vielzahl an sekundären antioxidativen Pflanzenstoffen, die unter anderem das Herz-KreislaufSystem unterstützen. Außerdem sind sie auch für eine vegane Ernährungsweise geeignet.

Der Begriff "keine Getreidekomponente" bedeutet, dass Getreideprodukte nicht im erfindungsgemäßen Müsliprodukt verwendet werden. Das Müsliprodukt ist damit "frei" von Getreide. Typische Getreidekomponenten in Müsliprodukten umfassen beispielsweise Hafer, Weizen, Dinkel, Roggen, Gerste, Mais, Reis und/oder Hirse aber auch andere Getreidekomponenten sind denkbar. Im Gegensatz zu Müsliprodukten aus Getreide enthält das erfindungsgemäße Müsliprodukt kein Gluten. Ebenfalls enthält es vorzugsweise keine Allergene wie Nüsse oder Spuren von Nüssen. Daher ist das Müsliprodukt in einer vorteilhaften Ausführungsform frei von Allergenen, insbesondere frei von Gluten, Nüssen und Laktose.

Für das Müsliprodukt kommen Linsen in Betracht. Die Hülsenfrüchte sind nicht auf bestimmte Sorten oder Arten beschränkt. Diese können als ganze Frucht oder Granulat verwendet werden.

In einer offenbarten jedoch nicht beanspruchten Ausführungsform sind die Hülsenfrüchte ausgewählt aus beispielsweise Bohnen, Erbsen, Kichererbsen. Luzerne, Klee, Tamarinde, Sojabohnen und Lupinen. Geeignete Linsensorten sind beispielsweise Richlea, Laird und/oder Belugalinsen.

Um den Geschmack des Müsliprodukts zu beeinflussen und/oder eine ausgewogene Mischung aus Nährstoffen in dem Müsliprodukt zu erhalten, können weitere Bestandteile in dem Müsliprodukt enthalten sein.

Beispielsweise kann das Müsliprodukt ferner eine Fruchtkomponente aufweisen. Die Fruchtkomponente kann dabei aus einer oder mehreren Fruchtsorten bestehen. Die Früchte werden vorzugsweise derart verarbeitet, dass sie die Mindesthaltbarkeit des Müslis nicht beeinträchtigen.

Für die Fruchtkomponente werden deshalb Trockenfrüchte oder getrocknete und gezuckerte Früchte eingesetzt. Diese werden vor der Zugabe erneut durch Warmluft oder Infrarot speziell getrocknet und dadurch die Packbarkeit sowie die Haltbarkeit verbessert.

In einer offenbarten jedoch nicht beanspruchten vorteilhaften Ausführungsform umfasst das Müsliprodukt daher ferner eine Fruchtkomponente. Geschmacklich passend sind beispielsweise Papaya, Ananas, Mango, Apfel, Birne, Aprikose, Pflaume, Zwetschge, Heidelbeere, Melone, Feige, Dattel und Kiwi.

Aufgrund des hohen Eiweißgehalts der Hülsenfrüchte ist es vorteilhaft, dem Müsliprodukt ferner einen Bestandteil hinzuzufügen, der Eiweiße spalten kann. Ein solcher Bestandteil können eiweißspaltende Enzyme oder Enzymmischungen sein. Bekannte Enzyme oder Enzymmischungen sind beispielsweise Papain, Bromelain und Actinidain. Diese sind unter anderem auch in exotischeren Früchten, wie etwa Papaya, Ananas, Mango und Kiwi enthalten. Durch die Kombination von Hülsenfrüchten und eiweißspaltenden Bestandteil wird die Verdauung des Eiweißes zusätzlich gefördert.

In einer offenbarten jedoch nicht beanspruchten vorteilhaften Ausführungsform umfasst die Fruchtkomponente daher Papaya, Ananas, Mango und/oder Kiwi.

Hülsenfrüchte sind arm an Fetten. Durch die Hinzugabe von Ölsaaten zu dem Müsliprodukt kann der Gehalt an ungesättigten Fettsäuren, Vitaminen und/oder Mineralstoffen erhöht werden. Der Nährwert des Müsliprodukts kann somit verbessert werden. Außerdem können Ölsaaten dem Müsliprodukt zusätzliche Aromen verleihen.

In einer offenbarten jedoch nicht beanspruchten weiteren Ausführungsform kann das Müsliprodukt ferner Ölsaaten umfassen. Die Ölsaaten können beispielsweise ausgewählt sein aus Kürbiskernen, Leinsamen, Sonnenblumenkernen, Mariendistelsamen, Sesam, Leindottersamen, Zucchinikernen, Gurkenkernen, Nachtkerzensamen, Chiasaat, Hanfsamen, Flohsamen, Mohnsamen, Pinienkernen, Mandeln und Kokos.

Für den Verzehr kann das Müsliprodukt mit Fruchtsäften und/oder Milchprodukten, wie Milch oder Joghurt, versetzt werden. Insbesondere durch die Kombination mit tierischem Eiweiß wird die biologische Wertigkeit der so hergestellten Müslispeise weiter erhöht.

Für eine vegane Ernährungsweise kann das Müsliprodukt mit Milchersatzprodukten, wie etwa Mandel- oder Hafermilch, versetzt werden.

Durch das Einweichen und Vorkochen werden die roh nicht verzehrfähigen Hülsenfrüchte sofort verzehrbar. Außerdem werden durch diese Vorbehandlung die oft Blähungen verursachenden Hülsenfrüchte leichter verdaulich. Durch die Trocknung werden die Hülsenfrüchte für einen längeren Zeitraum lagerfähig und knusprig.

Der Begriff "kochen" oder "vorkochen" in der vorliegenden Anmeldung bezieht sich auf das Garen oder Zubereiten von Nahrungsmitteln allgemein. Darunter fallen auch Verfahren wie blanchieren oder pochieren. Vorgekochte Nahrungsmittel sind entsprechend so weit vorbereitet, dass sie verzehrfertig sind. Die Nahrungsmittel werden dazu in einer Flüssigkeit, zumeist Wasser, oder Wasserdampf bei hohen Temperaturen zubereitet. Unter Normaldruck (Atmosphärendruck) beträgt die Temperatur bis zu 100°C. Bei Überdruck können Temperaturen höher als 100°C erreicht werden. Die Verweildauer in der Flüssigkeit oder dem Dampf ist abhängig von dem gewählten Verfahren und/oder dem gewählten Lebensmittel.

Zunächst müssen die rohen Hülsenfrüchte eingeweicht werden. Der Grund dafür ist, dass sich unverdauliche Kohlenhydrate, die beim Menschen zu Blähungen führen können, beim Einweichen lösen. Außerdem weicht die Haut der Hülsenfrüchte auf, wodurch die Garzeit verringert wird. Auch reduziert das Einweichen den Gehalt an Phytinsäure. Das ist notwendig, da Phytinsäure Mineralien bindet, die dem Körper dadurch nicht zur Verfügung stehen. Durch das Einweichen zersetzt sich auch das giftige Phasin.

Die Hülsenfrüchte können mit Wasser eingeweicht werden. Um dem natürlichen Charakter des Müsliprodukts zu unterstreichen, werden keine Zusätze, wie etwa Natriumbicarbonat, verwendet.

Die Einweichzeit liegt je nach Art der Hülsenfrüchte zwischen 30 Minuten und 36 Stunden. Linsen müssen zwischen 1 und 24 Stunden eingeweicht werden und Bohnen, Erbsen und Kichererbsen müssen typischerweise zwischen 8 bis 36 Stunden eingeweicht werden. In einer offenbarten jedoch nicht beanspruchten vorteilhaften Ausführungsform werden die Hülsenfrüchte also mindestens 30 Minuten in Wasser eingeweicht.

Für das gleichmäßige Einweichen der Hülsenfrüchte ist es wichtig, dass diese regelmäßig umgewälzt werden, da sonst das Eigengewicht der Hülsenfrüchte das Wasser verdrängt. Das Umwälzen kann durch Druckluft erfolgen, was die Hülsenfrüchte vor Beschädigungen bewahrt.

In rohem Zustand sind die Hülsenfrüchte nicht genießbar. Durch Vorkochen können die Hülsenfrüchte für den Verzehr vorbereitet werden. Gerade größere Hülsenfrüchte, wie Erbsen und Bohnen, tendieren jedoch dazu, nach dem Kochen aufzuplatzen. Um ein solches Aufplatzen zu reduzieren, können die eingeweichten Hülsenfrüchte einen zweistufigen Vorkochschritt durchlaufen.

In einer ersten Stufe werden die eingeweichten Hülsenfrüchte unter Überdruck bei hohen Temperaturen gekocht. Die Kochzeit und die Temperatur sind abhängig von der Art der Hülsenfrüchte. Die Hülsenfrüchte werden im Bereich von 100°C bis 120°C gekocht. Die geschälten gelben und roten Linsen werden vorzugsweise im Bereich von 100°C bis 105°C gekocht, die ungeschälten Beluga-Linsen vorzugsweise im Bereich von 115°C bis120°C. Die Hülsenfrüchte verbleiben nur kurz in der ersten Stufe. Die Hülsenfrüchte werden für etwa 2 bis 10 Minuten, vorzugsweise für etwa 3 bis 8 Minuten, in der ersten Stufe gekocht.

In einer zweiten Stufe werden die Hülsenfrüchte unter Atmosphärendruck bei niedrigeren Temperaturen weitergekocht. Dabei ist die Temperatur reduziert. Dadurch wird verhindert, dass die Hülsenfrüchte aufgrund des Temperaturunterschieds zum Trocknungsschritt aufplatzen.

In der zweiten Stufe werden die Hülsenfrüchte bei einer Temperatur im Bereich von 40°C bis 70°C, vorzugsweise von 45°C bis 60°C, bevorzugt um etwa 50°C weitergekocht. Die Hülsenfrüchte verbleiben für etwa 20 bis 60 Minuten, vorzugsweise für etwa 25 bis 50 Minuten, bevorzugt für 30 bis 45 Minuten in der zweiten Stufe.

Im zweiten Schritt können die Hülsenfrüchte bei offenem Blancheur gekocht werden, sodass der Wasserdampf abziehen kann. Dadurch wird es möglich, dass der Wassergehalt der Hülsenfrüchte bereits bei diesem Schritt reduziert wird.

Erfindungsgemäß durchlaufen die eingeweichten Hülsenfrüchte folglich einen zweistufigen Vorkochschritt, wobei die Hülsenfrüchte in einer ersten Stufe unter Überdruck gekocht werden und in einer zweiten Stufe unter atmosphärischen Druck gekocht werden.

Während die rohen Hülsenfrüchte um die 15 Gew.-% Restfeuchte aufweisen und diese nach dem Einweichen und Kochen und vor dem Trocknen ca. 60 Gew.-% beträgt, muss sie im Trockner, langsam und schonend auf unter 10 Gew.-%, vorzugsweise auf unter 8 Gew.-%, bevorzugt auf unter 6 Gew.-% heruntergetrocknet werden, damit das Müsliprodukt aufgrund des geringen Werts an aktivem Wasser in den getrockneten Hülsenfrüchten über einen längeren Zeitraum haltbar ist.

Erfindungsgemäß werden die vorgekochten Hülsenfrüchte also auf eine Restfeuchte von unter 10 Gew.-% getrocknet, vorzugsweise auf eine Restfeuchte von unter 8 Gew.-%, bevorzugt von unter 6 Gew.-%. Durch die Trocknung auf unter 10 Gew.- % Restfeuchte sind die Linsen knackig und schmecken nussig, ohne dass sie Nüsse enthalten.

Um eine entsprechende Restfeuchte zu erreichen, müssen die vorgekochten Hülsenfrüchte über einen Zeitraum von 2,5 bis 5 Stunden, vorzugsweise 3 bis 4 Stunden getrocknet werden. Der lange Trocknungszeitraum ist nötig, da das Wasser aus dem Innern der Hülsenfrüchte langsam an die Oberfläche gelangen muss, um dort zu verdampfen.

Üblicherweise werden die Hülsenfrüchte bei einer Temperatur im Bereich von 60°C bis 120°C getrocknet, vorzugsweise in einem Bereich von 70°C bis 110°C. Während der Trocknung kann die Temperatur entsprechend geändert werden. Ebenfalls könnten die Hülsenfrüchte auch einen Trocknungsschritt durchlaufen, der unterschiedliche aufeinanderfolgende Temperaturabschnitte aufweist. Die Temperaturabschnitte könnten zeitlich oder örtlich unterschiedlich sein. Wichtig ist, dass eine kontinuierliche Trocknung ermöglicht wird.

Nach dem Trocknungsschritt können die Hülsenfrüchte eine Reinigungskaskade durchlaufen, um Übergrößen, wie etwa Verbackungen sowie Feinteile und Bruch abzutrennen. Auch werden dabei unreife Körner, die beim Einweichen weniger Wasser aufgenommen haben und daher nicht so gut durchgekocht sind, entfernt. Gleichzeitig werden eventuell vorhandene andere Fremdbestandteile abgeschieden und so ebenfalls entfernt.

Schließlich werden die Bestandteile des Müsliprodukts entsprechend vermischt und abgepackt oder einzeln abgepackt und später vermischt.

Die so hergestellten Hülsenfrüchte und das finale Müsliprodukt sind entsprechend lange haltbar, nämlich mindestens 6 Monate, vorzugsweise mindestens 12 Monate, bevorzugt mindestens 24 Monate.

Hülsenfrüchte, insbesondere Linsen, werden oft in Gemenge-/ Mischanbau mit glutenhaltigen Getreiden angebaut. Um Verunreinigungen der Hülsenfrüchte mit glutenhaltigen Bestandteilen zu reduzieren, durchlaufen die Hülsenfrüchte in einer weiteren Ausführungsform vor dem Einweichen einen Vorreinigungsschritt zur Entfernung von artfremden oder arteigenem Fremdbesatz.

Um den im Trocknungsschritt erzeugten Knuspereffekt gegebenenfalls zu verstärken, können die Hülsenfrüchte optional einer Nachbehandlung unterzogen werden. Die Hülsenfrüchte können beispielsweise geröstet werden, wodurch die Hülsenfrüchte noch knuspriger werden und - falls gewünscht - ein leichtes Röstaroma erzeugt werden kann. Als Nebeneffekt werden dabei mikrobiologische Belastungen wie die Anzahl von Bakterien (Keimzahl) weiter reduziert.

Außerdem ist es möglich, die Hülsenfrüchte mit Wasser zu besprühen und anschließend erneut zu trockenen, um einen stärkeren Knuspereffekt zu erhalten. Wenn im Wasser Salz, Gewürze oder Süßungsmittel, wie etwa Zucker, aufgelöst werden, können die Hülsenfrüchte mit einem salzigen oder süßen Geschmack versehen werden.

Entsprechend durchlaufen die Hülsenfrüchte in einer weiteren Ausführungsform nach dem Trocknen eine Nachbehandlung, vorzugsweise zum Rösten und/oder Würzen.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgenden Ausführungsbeispiele zu verweisen.

### Beispiel 1

Im Folgenden ist eine exemplarische Zusammensetzung des Müsliprodukts gezeigt, in dem die Hülsenfrüchte verschiedene Linsensorten sind:

| | |
|---|---|
| Linsen, rot, geschält: | 30 Gew.-% |
| Linsen, gelb, geschält: | 25 Gew.-% |
| Linsen, Beluga: | 20 Gew.-% |
| Papayawürfel: | 25 Gew.-% |

Die geschälten roten und gelben Linsen sind aufgrund der Schälung besonders mild und gut verträglich. Die Beluga-Linsen sind nach dem Vorkochen und Trocknen knackig und schmecken nussig. Als Fruchtkomponente sind Papayawürfel enthalten, weil sie einerseits vom Geschmack her am besten zu Linsen passen, und andererseits das eiweißspaltende Enzym Papain enthalten, so dass das Eiweiß der Linsen besser verdaulich ist.

In dem Beispiel können eine oder mehrere Linsensorten durch andere Linsensorten oder andere Hülsenfrüchte ausgetauscht oder erweitert werden. Denkbar wäre auch, dass zusätzlich Ölsaaten und/oder weitere Arten von Früchten hinzugegeben werden. Die Gewichtsanteile sind variabel und können entsprechend angepasst werden. Geeignete Hülsenfrüchte, Früchte sowie Ölsaaten sind im Beschreibungsteil aufgeführt.

### Beispiel 2

Im Folgenden ist ein Verfahren zur Herstellung der exemplarischen Zusammensetzung nach Beispiel 1 beschrieben.

### a) Einweichen

Die Hülsenfrüchte werden in Edelstahltanks gefüllt und in Trinkwasser eingeweicht. Das Verhältnis entspricht dabei in der Regel 1/3 Hülsenfrüchte zu 2/3 Wasser. Es werden keine Zusätze wie z.B. Natriumbicarbonat zugegeben. Das Wasser hat Zimmertemperatur.

Die Hülsenfrüchte werden wie folgt eingeweicht:

| | |
|---|---|
| Linsen, rot, geschält: | 0,5 bis 2 h |
| Linsen, gelb, geschält: | 0,5 bis 2 h |
| Linsen, Beluga: | 8 bis 12 h |

Für das gleichmäßige, homogene Einweichen werden die Hülsenfrüchte regelmäßig umgewälzt. Dieses Umwälzen erfolgt produktschonend durch Druckluft, die durch Düsen an verschiedenen Stellen des Tanks eingebracht wird.

Nach dem Ende der Einweichzeit wird der Tank geöffnet, und die Hülsenfrüchte im Wasserbad zur nächsten Prozessstufe, dem Hochdruckblancheur transportiert. Dabei kann eine Reinigungsstufe zwischengeschaltet sein, in der die Hülsenfrüchte über einen Steinefänger zum Ausscheiden schwerer Teile wie unreife Körner und einem Flotierungs-Tank zum Ausscheiden leichter Teile wie Halme oder Schalen geführt werden.

### b) Vorkochen

Die eingeweichten Hülsenfrüchte erreichen zunächst einen Hochdruckblancheur, in dem Sie mit Überdruck in Wasserdampf blanchiert werden.

Kochzeit und Temperatur sind produktabhängig:

| | Zeit | Temperatur |
|---|---|---|
| Linsen, rot, geschält | 2,5 bis 3,5 min | 101°C |
| Linsen, gelb, geschält | 2,5 bis 3,5 min | 101°C |
| Linsen, Beluga | 7 bis 8 min | 116°C |

Nachdem die Hülsenfrüchte im Hochdruckblancheur kurz, aber intensiv gekocht wurde, wird es im atmosphärisch betriebenen Nachblancheur stabilisiert und dabei langsam auf etwa 80°C abgekühlt.

| | Zeit | Temperatur |
|---|---|---|
| Linsen, rot, geschält | 30 bis 35 min | 50°C |
| Linsen, gelb, geschält | 40 bis 45 min | 50°C |
| Linsen, Beluga | 25 bis 30 min | 45°C |

### c) Trocknen

Durch ein sich hin- und her bewegendes Oszillierband werden die Hülsenfrüchte vom Nachblancheur auf einen 3-Band-Trockner gebracht und dort in Verbindung mit einem Wehr gleichmäßig flächendeckend verteilt, damit die Hülsenfrüchte gleichmäßig durchtrocknen. Die Verweilzeit der Hülsenfrüchte im Trockner beträgt 3 bis 4 h.

Nach dem Trockner durchlaufen die Hülsenfrüchte gegebenenfalls eine weitere Reinigungskaskade:
- Siebe zum Abtrennen von Übergrößen (Verbackungen) und Feinteilen (Bruch),
- Schwerteilausleser (zum Abtrennern unreifer Körner, die beim Einweichen weniger Wasser aufgenommen haben und daher nicht so gut durchgekocht sind),
- Allmetallabscheider (zum Abscheiden eventuell abgelöster Anlagenteile wie Drähtchen vom Bandgewebe).

### d) Nachbehandlung (optional)

Um den im Trockner erzeugten Knuspereffekt gegebenenfalls zu verstärken, können die Hülsenfrüchte über beispielsweise einen Infrarottrockner weiterverarbeitet werden, wodurch sie noch knuspriger werden und - falls gewünscht - kann ein leichtes Röstaroma erzeugt werden.

Im Infrarot-Drehrohrtrockner können die Hülsenfrüchte auch mit Wasser besprüht werden, und diese werden dann - unter ständiger Umwälzung - getrocknet. Wenn im Wasser Salz, Zucker oder Gewürzmischungen enthalten sind, können die Hülsenfrüchte entsprechend gewürzt werden.

## Patentansprüche

1. Verfahren zur Herstellung eines Müsliprodukts, wobei das Müsliprodukt verzehrfertige Hülsenfrüchte und eine Fruchtkomponente umfasst, wobei das Müsliprodukt keine Getreidekomponente enthält und wobei die Hülsenfrüchte Linsen umfasst,
wobei das Verfahren die Schritte umfasst:
a) Einweichen der Hülsenfrüchte, wobei die Einweichzeit zwischen 1 und 24 Stunden liegt,
b) Vorkochen der eingeweichten Hülsenfrüchte, und
c) Trocknen der vorgekochten Hülsenfrüchte auf eine Restfeuchte unter 10 Gew.-%, wobei die Trocknungszeit zwischen 2,5 und 5 Stunden liegt,
**dadurch gekennzeichnet, dass** die eingeweichten Hülsenfrüchte einen zweistufigen Vorkochschritt durchlaufen, wobei die Hülsenfrüchte in einer ersten Stufe unter Überdruck bei einer Temperatur zwischen 100°C und 120°C und einer Kochzeit zwischen 2 und 10 Minuten gekocht werden und in einer zweiten Stufe unter atmosphärischen Druck bei einer Temperatur zwischen 40°C und 70°C und einer Kochzeit zwischen 20 und 60 Minuten gekocht werden.

2. Verfahren nach Anspruch 1, **dadurch gekennzeichnet, dass** die Hülsenfrüchte vor dem Einweichen einen Vorreinigungsschritt zur Entfernung von artfremden oder arteigenem Fremdbesatz durchlaufen.

3. Verfahren nach Anspruch 1 oder 2, **dadurch gekennzeichnet, dass** die Hülsenfrüchte nach dem Trocknen eine Nachbehandlung, vorzugsweise zum Rösten und/oder Würzen, durchlaufen.

## Claims

1. A method for producing a muesli product, wherein the muesli product comprises ready-to-eat legumes and a fruit component, wherein the muesli product contains no cereal component, and wherein the legumes comprise lentils,
wherein the method comprises the steps of:
a) soaking the legumes, wherein the soaking time is between 1 and 24 hours,
b) pre-cooking the soaked legumes, and
c) drying the pre-cooked legumes to a residual moisture content of less than 10 wt.%, wherein the drying time is between 2.5 and 5 hours,
**characterized in that** the soaked legumes undergo a two-stage pre-cooking step, wherein the legumes are cooked in a first stage under pressure at a temperature between 100°C and 120°C and a cooking time of between 2 and 10 minutes, and in a second stage are cooked at atmospheric pressure at a temperature between 40°C and 70°C and a cooking time of between 20 and 60 minutes.

2. The method according to claim 1, **characterized in that** the legumes undergo a precleaning step prior to soaking to remove foreign matter of a different species or foreign matter of the same species.

3. The method according to claim 1 or 2, **characterized in that** the legumes undergo a posttreatment, preferably for roasting and/or seasoning, after drying.

## Revendications

1. Procédé de fabrication d'un produit de type müesli, dans lequel le produit de type müesli comprend des légumineuses prêtes à la consommation et un composant à base de fruits, dans lequel le produit de type müesli ne contient aucun composant à base de céréales et dans lequel les légumineuses comprennent des lentilles,
le procédé comprenant les étapes de :
a) trempage des légumineuses, le temps de trempage étant compris entre 1 et 24 heures,
b) précuisson des légumineuses trempées, et
c) séchage des légumineuses précuites jusqu'à une humidité résiduelle inférieure à 10 % en poids, le temps de séchage étant compris entre 2,5 et 5 heures,
**caractérisé en ce que** les légumineuses trempées subissent une étape de précuisson en deux phases, les légumineuses étant cuites dans une première phase sous pression à une température comprise entre 100°C et 120°C et pendant un temps de cuisson compris entre 2 et 10 minutes, et dans une seconde phase à pression atmosphérique à une température comprise entre 40°C et 70°C et pendant un temps de cuisson compris entre 20 et 60 minutes.

2. Procédé selon la revendication 1, **caractérisé en ce que** les légumineuses subissent, avant le trempage, une étape de prénettoyage pour éliminer les impuretés étrangères ou propres à l'espèce.

3. Procédé selon la revendication 1 ou 2, **caractérisé en ce que** les légumineuses subissent, après le séchage, un post-traitement, de préférence pour la torréfaction et/ou l'assaisonnement.
